# EUROPÄISCHE PATENTSCHRIFT

(11) **EP 0 506 662 B1**
(45) Veröffentlichungstag und Bekanntmachung des Hinweises auf die Patenterteilung: **07.09.1994**
(21) Anmeldenummer: 90913823.2
(22) Anmeldetag: 24.09.1990
(51) Int. Cl.: B60T 13/567

(54) **GEHÄUSE FÜR EINEN PNEUMATISCHEN KRAFTVERSTÄRKER UND VERFAHREN ZU DESSEN HERSTELLUNG**
HOUSING FOR A PNEUMATIC BOOSTER AND PROCESS FOR MANUFACTURING IT
CARTER POUR UN AMPLIFICATEUR DE FORCE PNEUMATIQUE ET PROCEDE POUR SA FABRICATION

(30) Priorität: 21.12.1989 DE 3942211
(43) Veröffentlichungstag der Anmeldung: 07.10.1992
(73) Patentinhaber: ITT Automotive Europe GmbH, 60488 Frankfurt (DE)
(72) Erfinder: BÖHM, Peter, D-6382 Friedrichsdorf (DE); WAGNER, Wilfried, D-6338 Hüttenberg-Weidenhausen (DE); SCHIEL, Lothar, D-6238 Hofheim 6 (DE); RÜFFER, Manfred, D-6231 Sulzbach (DE); JACOBI, Ralf, D-6237 Liederbach (DE); GRAICHEN, Kai-Michael, D-6070 Langen (DE); MATTHEIS, Lothar, D-6000 Frankfurt am Main 60 (DE)
(86) Internationale Anmeldenummer: EP9001616
(87) Internationale Veröffentlichungsnummer: WO9109761

(56) Entgegenhaltungen:
- EP-A- 0 300 857
- DE-A- 2 326 415
- GB-A- 2 112 105
- US-A- 3 030 127

## Beschreibung

Die Erfindung betrifft ein Gehäuse für einen pneumatischen Kraftverstärker bestehend aus einer ersten und einer zweiten, mit einem Schutzanstrich versehenen unlösbar miteinander verbundenen Gehäusehälfte, die ineinander eingeschoben und sind, wobei die erste Gehäusehälfte einen nach außen umgebogenen Rand und die zweite Gehäusehälfte einen vorzugsweise zylindrisch ausgebildeten Randbereich aufweist und zwischen den beiden Gehäusehälften der radial außenliegende Bereich einer elastischen Membran gehalten ist, die der Abdichtung einer das Gehäuseinnere in zwei pneumatische Kammern unterteilenden beweglichen Wand dient, und wobei der Randbereich mehrere, regelmäßig verteilte Längsöffnungen aufweist, deren Längsachse parallel zu dessen Kante bzw. zum umgebogenen Rand der ersten Gehäusehälfte verläuft, so daß Zonen geringeren Widerstandes in radialer Richtung gebildet werden, sowie ein Verfahren zu dessen Herstellung.

Ein derartiges Gehäuse bzw. Verfahren zu dessen Herstellung sind aus der EP-A-0 300 857 bekannt. Die den zylindrischen Randbereich aufweisende Gehäusehälfte weist in diesem Bereich mehrere, auf dessen Umfang symmetrisch verteilte vorzugsweise oval- oder rechteckförmig ausgebildete Längsöffnungen auf, die mit der Außenkante des zylindrischen Randbereichs stegartige Zonen geringen Widerstandes in radialer Richtung begrenzen, die, nachdem die beiden Gehäusehälften ineinander geschoben worden sind, so eingedrückt werden, daß deren mittlere Bereiche sich von einer parallel zum umgebogenen Rand der anderen Gehäusehälfte durch die Endpunkte der Stege verläufenden Ebene axial entfernen. Dadurch wird insbesondere entlang der Verbindungslinie der beiden Gehäusehälften die Korrosionsgefahr weitgehend vermieden.

Als besonders nachteilig werden bei dem bekannten pneumatischen Kraftverstärker die extrem hohen Oberflächenspannungen die durch die Eindrückung der Stege insbesondere in deren mittlerem Bereich, innen und außen, auftreten und zur Beschädigung der aufgetragenen Lackschicht führen können. Die nicht mehr korrosionsgeschützten Stellen, die insbesondere im Betrieb des Kraftverstärkers einer erheblichen axialen Belastung ausgesetzt sind, sind besonders korrosionsgefährdet und können nach längerer Laufzeit ursächlich für einen Ausfall des Kraftverstärkers sein.

Es ist daher Aufgabe der vorliegenden Erfindung eine Verbindung der beiden Gehäusehälften eines pneumatischen Kraftverstärkers vorzuschlagen, die weitestgehend frei von Oberflächenspannnungen ist.

Diese Aufgabe wird erfindungsgemäß durch die Merkmale der unabhängigen Ansprüche 1 und 7 gelöst.

Weitere Einzelheiten und vorteilhafte Merkmale der Erfindung gehen aus den abhängigen Ansprüchen und der folgenden Beschreibung eines Ausführungsbeispiels im Zusammenhang mit der beiliegenden Zeichnung hervor. Dabei zeigt:
- Fig. 1: ein erfindungsgemäß zusammengebautes Gehäuse eines pneumatischen Kraftverstärkers,
- Fig. 2: die Ansicht "A" nach Fig. 1 in vergrößertem Maßstab, teilweise weggebrochen;
- Fig. 3: den Schnitt entlang der Linie "B-B" in Fig. 1;
- Fig. 4 bis Fig. 6: drei verschiedene Ausführungen der Einzelheit "C" nach Fig. 1, stark vergrößert.

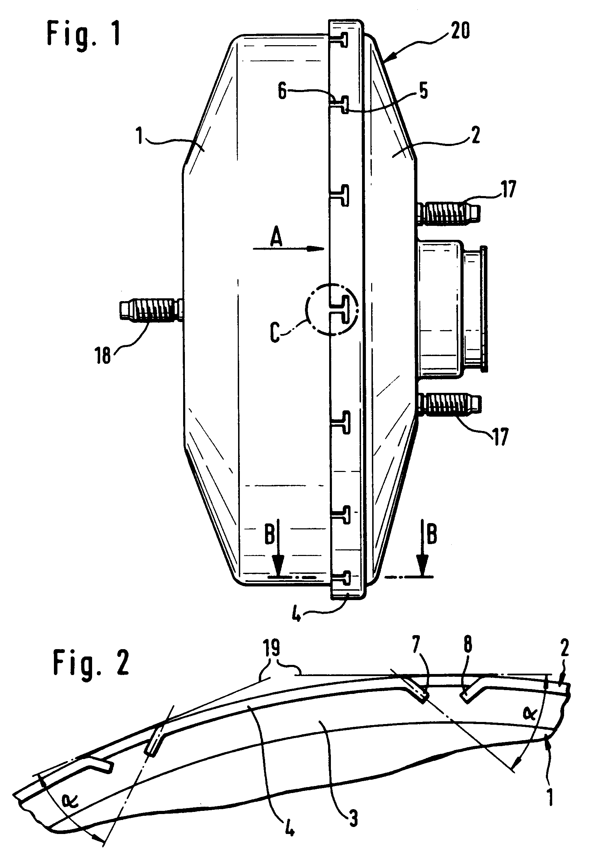

Das in Fig. 1 gezeigte Gehäuse 20 eines pneumatischen Kraftverstärkers, vorzugsweise eines Unterdruck-Bremskraftverstärkers, besteht aus einer ersten sowie einer zweiten Gehäusehälfte 1 und 2, die im Tiefziehverfahren aus Metallblechmaterial hergestellt und mit einem Schutzanstrich versehen sind. Im zusammengebauten Zustand sind die beiden Gehäusehälften 1, 2 unlösbar miteinander verbunden.

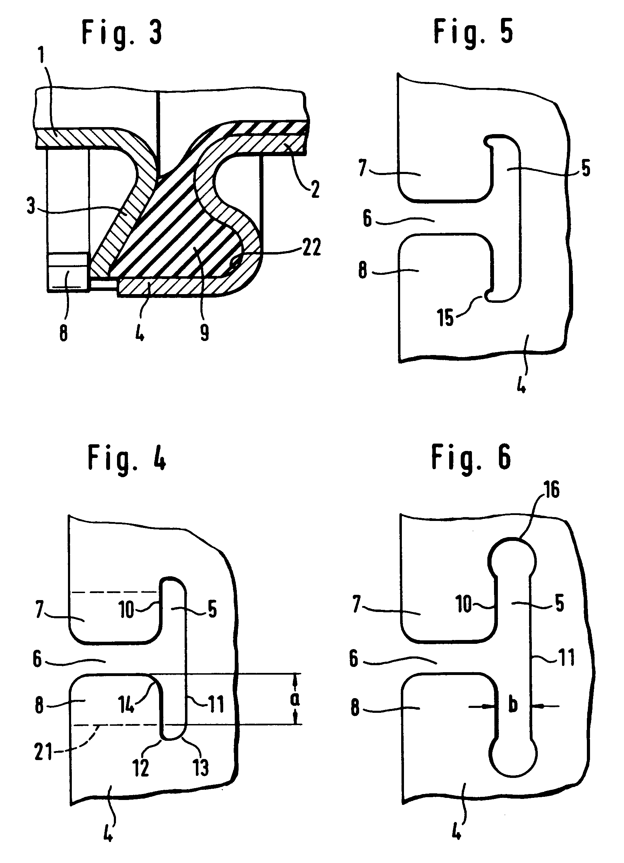

Die in Fig. 1 rechts gezeigte, mit Befestigungselementen 17 versehene Gehäusehälfte 2 weist einen zylindrischen Randbereich 4 auf, der einen nach außen umgebogenen Rand 3 (Fig. 3) der links dargestellten, mit Befestigungselementen 18 für einen nicht gezeigten Hauptbremszylinder ausgestatteten Gehäusehälfte 1 aufnimmt, wobei zwischen den beiden Gehäusehälften 1,2 der radial außenliegende Bereich einer flexiblen Membran 9 (Fig. 3) eingeklemmt ist. Die Membran 9 bildet zusammen mit einem metallischen, nicht gezeigten Membranteller eine bewegliche Wand, die das Gehäuseinnere in zwei pneumatische Kammern unterteilt, deren Aufgabe bekannt ist und deshalb nicht erläutert zu werden braucht.

Der zylindrische Randbereich 4 der rechten Gehäusehälfte 2 weist mehrere, an dessen Umfang regelmäßig verteilte Längsöffnungen 5 auf, die mit seiner außenliegenden Kante Zonen geringeren mechanischen Widerstands in radialer Richtung begrenzen. Die Kante wird durch senkrecht zur Längsachse der Längsbohrungen 5 verlaufende, in diese mündende axiale Schlitze 6 unterbrochen, so daß zwei in Umfangsrichtung gegenüberliegende Zungen 7,8 (Fig. 2) gebildet sind, die im zusammengebauten Zustand des Gehäuses 20 den umgebogenen Rand 3 der linken Gehäusehälfte 1 hintergreifen.

Wie insbesondere der Fig. 2 zu entnehmen ist, sind die Zungen 7,8 radial nach innen gerichtet und zwar vorzugsweise so, daß sie mit einer die Achse des Schlitzes 6 enthaltenden Tangentialebene 19 einen scharfen Winkel einschließen, dessen Größe im Bereich zwischen 10° und 90° liegt.

Wie aus Fig. 4 ersichtlich, sind die Längsöffnungen 5 bzw. die Zungen 7,8 bei einer ersten Ausführungsform der Erfindung durch zwei in Umfangsrichtung parallel im Abstand zueinander verlaufende Geraden 10,11 begrenzt, die über zwei ineinander übergehende Kreisbögen 12, 13 unterschiedlicher Radien verbunden sind. Die Anordnung ist dabei vorzugsweise derart getroffen, daß die an die die Zungen 7,8 direkt begrenzende Gerade 10 anschließenden Kreisbögen 12 einen kleineren Radius aufweisen. Um scharfe Geraden in dem mit dem umgebogenen Rand 3 der ersten Gehäusehälfte 1 in Berührung kommenden Bereich 14 der Zungen 7,8 weitgehend zu eliminieren, ist zwischen den den Schlitz 6 begrenzenden Stirnflächen der Zungen 7,8 und der Kante 10 ein Radius vorgesehen. Um die beim Umbiegen der Zungen 7,8 drohende Rissebildung im Blechmaterial und Lack zu vermeiden, werden die Zungen 7,8 bei der Montage entlang einer in Fig. gestrichelt dargestellten Linie 21 umgebogen, die in einem Abstand a parallel zu der den Schlitz 6 begrenzenden Schnittfläche der Zungen 7 bzw. 8 verläuft.

Weitere Möglichkeiten der Entlastung des beim Umbiegen der Zungen 7,8 am stärksten beanspruchten Bereichs zeigen die Figuren 5 und 6. Bei der in Fig. 5 gezeigten zweiten Ausführungsvariante der Erfindung wird der im Zusammenhang mit der Ausführung nach Fig. 4 erwähnte Kreisbogen 12 mit kleinerem Radius durch eine im Schnitt halbkreisförmige Entlastungssicke 15 ersetzt, die die an dieser Stelle beim Umbiegen auftretende Materialspannung auf ein Minimum reduziert.

Eine andere Möglichkeit, die erwähnte Materialspannung zu eliminieren, ist bei einer dritten, in Fig. 6 dargestellten Ausführungsform gezeigt. Bei dieser Variante sind die Längsöffnungen 5 in Umfangsrichtung durch Kreisbögen 16 begrenzt, deren Wirkung mit der der Entlastungssicken 15 nach Fig. 5 vergleichbar ist. Der Radius der Kreisbögen 16, deren Zentriwinkel im Bereich zwischen 240° und 310° liegt, ist vorzugsweise größer als der axiale Abstand b der beiden die Längsöffnung 5 axial begrenzenden Geraden 10 und 11.

Um nun eine unlösbare Verbindung zwischen den beiden Gehäuseschalen 1 und 2 herstellen zu können, werden im zylindrischen Randbereich 4 der zweiten Gehäusehälfte 2 zunächst der Längsöffnungen 5 mit den axialen Schlitzen 6, vorzugsweise in einem Stanzvorgang ausgebildet, wonach die so vorbereitete zweite Gehäusehälfte 2 lackiert wird. Danach wird der radial außenliegende Dichtwulst der flexiblen Membran 9 in eine in der zweiten Gehäusehälfte 2 ausgebildete Ringnut 22 eingesetzt und die vorher lackierte erste Gehäusehälfte 1 in die zweite Gehäusehälfte 1 eingeschoben, wobei der umgebogene Rand 3 in axialer Richtung zur Anlage am Dichtwulst der Membran 9 kommt.

Ein weiterer Montageschritt besteht darin, daß die beiden ineinander geschobenen Gehäusehälften 1,2 unter gleichzeitigem Verpressen des Dichtwulstes soweit zusammengedrückt werden, bis zwischen der die axial innere Begrenzung der Zungen 7,8 bildenden Geraden 10 und dem umgebogenen Rand 3 der ersten Gehäusehälfte 1 ein geringes axiales Spiel erreicht wird. Dadurch wird gewährleistet, daß die lackierte Oberfläche des umgebogenen Randes 3 beim anschließenden Umbiegen der Zungen 7,8 radial nach innen nicht beschädigt werden kann. Das Umbiegen der beiden Zungen 7,8 erfolgt gleichzeitig durch Einführen eines entsprechend gestalteten Lanciermessers senkrecht zur Schlitzebene. Danach wird die die beiden Gehäusehälften 1,2 zusammendrückende Kraft weggenommen, so daß das Gehäuse 20 seine axiale Betriebsstellung einnehmen kann, in der der umgebogene Rand 3 der ersten Gehäusehälfte 1 unter der elastischen Vorspannung des Dichtwulstes der Membran 9 zur Anlage an der axial inneren Seitenfläche der Zungen 7,8 kommt. Damit ist der Montagevorgang beendet.

### Bezugszeichenliste

- 1: Gehäusehälfte
- 2: Gehäusehälfte
- 3: Rand
- 4: Randbereich
- 5: Längsöffnung
- 6: Schlitz
- 7: Zunge
- 8: Zunge
- 9: Membran
- 10: Gerade
- 11: Gerade
- 12: Kreisbogen
- 13: Kreisbogen
- 14: Bereich
- 15: Entlastungssicke
- 16: Kreisbogen
- 17: Befestigungselement
- 18: Befestigungselement
- 19: Tangentialebene
- 20: Gehäuse
- 21: Linie
- 22: Ringnut

## Patentansprüche

1. Gehäuse (20) für einen pneumatischen Kraftverstärker, bestehend aus einer ersten und einer zweiten mit einem Schutzanstrich versehenen Gehäusehälfte (1,2), die ineinander eingeschoben und unlösbar miteinander verbunden sind, wobei die erste Gehäusehälfte (1) einen nach außen umgebogenen Rand (3) und die zweite Gehäusehälfte (2) einen vorzugsweise zylindrisch ausgebildeten Randbereich (4) aufweist und zwischen den beiden Gehäusehälften (1,2) der radial außenliegende Bereich einer elastischen Membran (9) gehalten ist, die der Abdichtung einer das Gehäuseinnere in zwei pneumatische Kammern unterteilenden beweglichen Wand dient, und wobei der Randbereich (4) mehrere, regelmäßig verteilte Längsöffnungen (5) aufweist, deren Längsachse parallel zu dessen Kante bzw. zum umgebogenen Rand (3) der ersten Gehäusehälfte (1) verläuft, so daß Zonen geringeren Widerstandes in radialer Richtung gebildet werden, dadurch **gekennzeichnet**, daß die Zonen geringeren Widerstandes durch je zwei gegenüberliegende Zungen (7,8) gebildet sind, die mittels je eines senkrecht zur Längsachse der Längsöffnungen (5) verlaufenden axialen Schlitzes (6) voneinander getrennt sind und im zusammengebauten Zustand des Gehäuses (20) den umgebogenen Rand (3) axial hintergreifen.

2. Gehäuse nach Anspruch 1, dadurch **gekennzeichnet**, daß die Zungen (7,8) radial nach innen gerichtet sind, wobei der zwischen einer Zunge (7 bzw. 8) und einer die Achse des Schlitzes (6) enthaltenden Tangentialebene eingeschlossene Winkel (α) im Bereich zwischen 10° und 90° liegt.

3. Gehäuse nach einem der Ansprüche 1 oder 2, dadurch **gekennzeichnet**, daß die Zungen (7,8) in ihrem der Längsöffnungen (5) benachbarten Bereich abgerundet ausgebildet sind.

4. Gehäuse nach Anspruch 1, wobei die Längsöffnungen einerseits durch zwei in der Umfangsrichtung in axialem Abstand voneinander verlaufende Geraden begrenzt sind, dadurch **gekennzeichnet**, daß die Längsöffnungen (5) andererseits durch Kreisbögen (12,13) unterschiedlicher Radien begrenzt sind, wobei die die Zungen (7,8) begrenzenden Kreisbögen (12) einen kleineren Radius aufweisen.

5. Gehäuse nach dem Oberbegriff des Anspruches 4, dadurch **gekennzeichnet**, daß die Längsöffnungen (5) durch Kreisbögen (16) begrenzt sind, deren Radius größer ist als der axiale Abstand (b) der Geraden (10,11) voneinander und deren Zentriwinkel zwischen 240° und 310° liegen.

6. Gehäuse nach Anspruch 5, dadurch **gekennzeichnet**, daß die die Zungen (7,8) begrenzenden Kreisbögen (16) als Entlastungssicken (15) ausgebildet sind.

7. Verfahren zur Herstellung eines Gehäuses (20) für einen pneumatischen Kraftverstärker, das aus zwei Gehäusehälften (1) besteht, die ineinander eingeschoben und unlösbar miteinander verbunden sind, wobei die erste Gehäusehälfte (1) einen nach außen umgebogenen Rand (2) und die zweite Gehäusehälfte einen vorzugsweise zylindrisch ausgebildeten Randbereich (4) aufweist und zwischen den beiden Gehäusehälften (1,2) der radial außenliegende Bereich einer elastischen Membran (9) gehalten ist, die der Abdichtung einer das Gehäuseinnere in zwei pneumatische Kammern unterteilenden beweglichen Wand dient, und wobei der Randbereich (4) mehrere, regelmäßig verteilte Längsöffnungen (5) aufweist, deren Längsachse parallel zu dessen Kante bzw. zum umgebogenen Rand (3) der ersten Gehäusehälfte (1) verläuft, so daß Zonen geringeren Widerstandes in radialer Richtung gebildet werden, **gekennzeichnet** durch die folgenden Verfahrensschritte:
a) Herstellen von axialen Schlitzen (6) im Bereich der Längsöffnungen (5) so, daß zwei in Umfangsrichtung gegenüberliegende Zungen (7,8) gebildet werden,
b) Auftragen eines Schutzanstrichs auf beide Gehäusehälften (1,2),
c) Zusammendrücken der beiden Gehäusehälften (1,2) unter gleichzeitigem Verpressen des radial außenliegenden Bereichs der elastischen Membran (9) so, daß zwischen der Innenkante (10) der Zungen (7,8) und dem umgebogenen Rand (3) ein geringer axialer Abstand ensteht,
d) gleichzeitiges Umbiegen der beiden Zungen (7,8) radial nach innen und
e) Wegnahme der die beiden Gehäusehälften (1,2) zusammendrückenden axialen Kraft, so daß das Gehäuse (20) seine axiale Betriebsstellung einnimmt.

8. Verfahren nach Anspruch 7, dadurch **gekennzeichnet**, daß das Umbiegen der beiden Zungen (7,8) mittels eines senkrecht zur Schlitzebene wirkenden Werkzeugs erfolgt.

9. Verfahren nach Anspruch 7, dadurch **gekennzeichnet**, daß die Schlitze (6) durch Stanzen hergestellt werden.

10. Verfahren nach Anspruch 7, dadurch **gekennzeichnet**, daß die Schlitze (6) durch Fräsen hergestellt werden.

11. Verfahren nach Anspruch 7, dadurch **gekennzeichnet**, daß das Umbiegen der Zungen (7,8) entlang einer Linie (21) erfolgt, die in einem Abstand (a) parallel zur Begrenzung des Schlitzes (6) verläuft.

## Claims

1. A housing (20) for a pneumatic power booster, being comprised of a first and a second housing half (1, 2) which are furnished with a protective paint and are telescoped one into the other and undetachably coupled to each other, the first housing half (1) presenting a rim (3) which is bent over outwardly, and the second housing half (2) presenting an edge range (4) of preferably cylindrical configuration, and the radially outside range of an elastic diaphragm (9) being retained between the two housing halves (1, 2) and serving to seal a movable wall subdividing the inner space of the housing into two pneumatic chambers, and the said edge range (4) being formed with a plurality of uniformly distributed longitudinal openings (5) whose longitudinal axis runs parallel to its edge or, respectively, to the bent-over rim (3) of the first housing half (1) so that zones of slighter resistance in radial direction are formed,
**characterized** in that the zones of slighter resistance are each formed by two tongues (7, 8) which are positioned opposite each other, which are separated from each other by one each axial slot (6) extending at right angles to the longitudinal axis of the longitudinal openings (5) and which, in the assembled condition of the housing (20), make grip behind the bent-over rim (3) in axial direction.

2. A housing as claimed in claim 1,
**characterized** in that the tongues (7, 8) point radially inwardly, the angle (α) formed between one tongue (7 or 8, respectively) and a tangential plane containing the axis of the slot (6) ranging between 10 degrees and 90 degrees.

3. A housing as claimed in claim 1 or claim 2,
**characterized** in that the tongues (7, 8) have a rounded configuration in their range which is adjacent to the longitudinal openings (5).

4. A housing as claimed in claim 1, the longitudinal openings, on the one hand, being confined by two straight lines running at an axial distance from each other in the circumferential direction,
**characterized** in that the longitudinal openings (5), on the other hand, are limited by circular arcs (12, 13) of different radii, the circular arcs (12) confining the tongues (7, 8) having a smaller radius.

5. A housing as claimed in the preamble of claim 4,
**characterized** in that the longitudinal openings (5) are limited by circular arcs (16), the radius of which is larger than the axial distance (b) of the straight lines (10, 11) from each other, and the central angles of which range between 240 degrees and 310 degrees.

6. A housing as claimed in claim 5,
**characterized** in that the circular arcs (16) confining the tongues (7, 8) are designed as relieving beads (15).

7. A process for the manufacture of a housing (20) for a pneumatic power booster, which is comprised of two housing halves (1) which are telescoped one into the other and undetachably coupled to each other, the first housing half (1) presenting a rim (2) which is bent over outwardly and the second housing half presenting an edge range (4) of preferably cylindrical configuration, and the radially outside range of an elastic diaphragm (9) being retained between the two housing halves (1, 2) and serving to seal a movable wall subdividing the inner space of the housing into two pneumatic chambers, and the said edge range (4) being formed with a plurality of uniformly distributed longitudinal openings (5), the longitudinal axis of which runs parallel to its edge or, respectively, the bent-over rim (3) of the first housing half (1) so that zones of slighter resistance in radial direction are formed,
**characterized** by the following process steps:
a) fabrication of axial slots (6) in the range of the longitudinal openings (5) in such a manner that two tongues (7, 8) are formed which are positioned opposite each other in circumferential direction;
b) application of a protective paint on both housing halves (1, 2);
c) pressing the two housing halves (1, 2) together, while the radially outer range of the elastic diaphragm (9) is simultaneously compressed, in such a manner that a slight axial distance results between the internal edge (10) of the tongues (7, 8) and the bent-over rim (3);
d) simultaneous bending-over of the two tongues (7, 8) in radially inward direction, and
e) removal of the axial force which presses the two housing halves (1, 2) together so that the housing (20) assumes its axial operating position.

8. A process as claimed in claim 7,
**characterized** in that the bending-over of the two tongues (7, 8) is effected by means of a tool acting at right angles to the plane of the slots.

9. A process as claimed in claim 7,
**characterized** in that the slots (6) are fabricated by punching.

10. A process as claimed in claim 7,
**characterized** in that the slots (6) are fabricated by milling.

11. A process as claimed in claim 7,
**characterized** in that the bending-over of the tongues (7, 8) takes place along a line (21) which runs at a distance (a) in parallel to the boundary of the slot (6).

## Revendications

1. Boîtier (20) pour amplificateur pneumatique de force, constitué d'une première et d'une seconde moitiés de boîtier (1, 2) qui sont pourvues d'un revêtement de protection et qui sont emboîtées l'une dans l'autre et sont réunies entre elles d'une manière inséparable, dans lequel la première moitié de boîtier (1) comporte un bord (3) plié vers l'extérieur et la seconde moitié de boîtier (2) comporte une partie marginale (4) de préférence cylindrique, tandis qu'entre les deux moitiés de boîtier (1, 2), est maintenue la partie radialement extérieure d'une membrane élastique (9) qui sert à assurer l'étanchéité d'une paroi mobile divisant l'intérieur du boîtier en deux chambres pneumatiques et que la partie marginale (4) comporte plusieurs ouvertures longitudinales (5) qui sont réparties d'une manière régulière et dont l'axe longitudinal s'étend parallèlement à l'arête de cette partie marginale ou au bord plié (3) de la première moitié de boîtier (1), de sorte qu'il est formé des zones ayant une résistance plus faible dans la direction radiale, caractérisé en ce que les zones de plus faible résistance sont formées chacune de deux pattes (7, 8) qui se font face et, pour chaque paire, sont séparées l'une de l'autre au moyen d'une fente axiale (6) s'étendant perpendiculairement à l'axe longitudinal de l'ouverture longitudinale (5) et qui, à l'état assemblé du boîtier (20), s'accrochent axialement derrière le bord plié (3).

2. Boîtier suivant la revendication 1, caractérisé en ce que les pattes (7, 8) sont orientées radialement vers l'intérieur, l'angle (α) formé par une patte (7, 8) et un plan tangentiel contenant l'axe de la fente (6) étant compris entre 10° et 90°.

3. Boîtier suivant l'une des revendications 1 et 2, caractérisé en ce que les pattes (7, 8) ont une forme arrondie dans leur zone voisine de l'ouverture longitudinale (5).

4. Boîtier suivant la revendication 1, dans lequel les ouvertures longitudinales sont d'une part délimitées par deux droites s'étendant dans la direction circonférentielle à une certaine distance l'une de l'autre, caractérisé en ce que les ouvertures longitudinales (5) sont d'autre part délimitées par des arcs de cercle (12, 13) ayant des rayons différents, les arcs de cercle (12) délimitant les pattes (7, 8) ayant un diamètre plus petit.

5. Boîtier suivant le préambule de la revendication 4, caractérisé en ce que les ouvertures longitudinales (5) sont délimitées par des arcs de cercle (16) dont le rayon est supérieur à la distance axiale (b) séparant les droites (10, 11) l'une de l'autre et dont les angles au centre sont compris entre 240° et 310°.

6. Boîtier suivant la revendication 5, caractérisé en ce que les arcs de cercle (16) délimitant les pattes (7, 8) sont réalisés sous la forme d'encoches de soulagement (15).

7. Procédé de fabrication d'un boîtier (20) pour amplificateur pneumatique de force, constitué de deux moitiés de boîtier (1, 2) qui sont pourvues d'un revêtement de protection et qui sont emboîtées l'une dans l'autre et sont réunies entre elles d'une manière inséparable, dans lequel la première moitié de boîtier (1) comporte un bord (3) plié vers l'extérieur et la seconde moitié de boîtier (2) comporte une partie marginale (4) de préférence cylindrique, tandis qu'entre les deux moitiés de boîtier (1, 2), est maintenue la partie radialement extérieure d'une membrane élastique (9) qui sert à assurer l'étanchéité d'une paroi mobile divisant l'intérieur du boîtier en deux chambres pneumatiques et que la partie marginale (4) comporte plusieurs ouvertures longitudinales (5) qui sont réparties d'une manière régulière et dont l'axe longitudinal s'étend parallèlement à l'arête de cette partie marginale ou au bord plié (3) de la première moitié de boîtier (1), de sorte qu'il est formé des zones ayant une résistance plus faible dans la direction radiale, caractérisé par les opérations suivantes de procédé :
a) réalisation de fentes axiales (6) dans la zone des ouvertures longitudinales (5), d'une façon telle qu'il se forme deux pattes (7, 8) se faisant face dans la direction circonférentielle,
b) dépôt d'un revêtement de protection sur les deux moitiés de boîtier (1, 2),
c) serrage des deux moitiés de boîtier (1, 2) entre elles, accompagné d'une compression de la partie radialement extérieure de la membrane élastique (9), d'une façon telle qu'il se forme un léger espacement axial entre l'arête intérieure (10) des pattes (7, 8) et le bord plié (3),
d) pliage simultané des deux pattes (7, 8) radialement vers l'intérieur et
e) suppression de la force axiale serrant les deux moitiés de boîtier (1, 2) entre elles, de sorte que le boîtier (20) occupe sa position axiale de fonctionnement.

8. Procédé suivant la revendication 7, caractérisé en ce que le pliage des deux pattes (7, 8) s'effectue au moyen d'un outil agissant perpendiculairement au plan de la fente.

9. Procédé suivant la revendication 7, caractérisé en ce que les fentes (6) sont réalisées par découpage à l'emporte-pièce.

10. Procédé suivant la revendication 7, caractérisé en ce que les fentes (6) sont réalisées par fraisage.

11. Procédé suivant la revendication 7, caractérisé en ce que le pliage des pattes (7, 8) est effectué le long d'une ligne (21) qui s'étend, à une distance (a), parallèlement à la limite de la fente (6).
